# EUROPÄISCHE PATENTSCHRIFT

(11) **EP 1 982 821 B1**
(45) Veröffentlichungstag und Bekanntmachung des Hinweises auf die Patenterteilung: **03.07.2013**
(21) Anmeldenummer: 08007438.8
(22) Anmeldetag: 16.04.2008
(51) Int. Cl.: B29C 49/78, B29C 49/04

(54) **Verfahren zur Herstellung von Kunststoffhohlkörpern durch Blasformen**
Method for manufacturing plastic hollow bodies by blow moulding
Procédé de fabrication de corps creux en plastique par moulage par soufflage

(30) Priorität: 16.04.2007 DE 102007018231
(43) Veröffentlichungstag der Anmeldung: 22.10.2008
(73) Patentinhaber: Feuerherm, Harald, D-53840 Troisdorf (DE)
(72) Erfinder: Feuerherm, Harald Dipl.Ing.Maschinenbau, 53840 Troisdorf (DE); Kappen, Günther Dipl.Ing. Maschinenbau, 53840 Troisdorf (DE); Deckwerth, Horst Dipl.Ing. Maschinenbau, 53840 Troisdorf (DE)
(74) Vertreter: Albrecht, Rainer Harald

(56) Entgegenhaltungen:
- GB-A- 2 109 591
- JP-A- 4 064 411
- US-A- 5 928 581

## Beschreibung

Die Erfindung betrifft ein Verfahren zur Herstellung von Kunststoffhohlkörpem durch Blasformen, bei dem
- ein schlauchförmiger Vorformling aus heißem, formbaren Kunststoff senkrecht nach unten extrudiert und in eine reproduzierbare Lage zu einer geöffneten Blasform gebracht wird,
- das untere Ende mittels einer Schlauchschließvorrichtung abgequetscht wird,
- die Blasform geschlossen wird und
- der Vorformling mit einem gasförmigen Medium, welches durch einen zuvor von oben oder unten in den Vorformling eingeführten Blasdorn oder durch eingestochene Nadeln eingeführt wird, in der Blasform zu einem Hohlkörper aufgeweitet wird,
wobei zumindest am Kopf des Hohlkörpers und am Boden des Hohlkörpers Butzen entstehen, die als Abfall von dem blasgeformten Hohlkörper abgetrennt werden. Ein solches Verfahren ist aus der Praxis bekannt und beispielsweise in JP 04-064411 A beschrieben.

Bei dem aus JP 04-064411 A bekannten Verfahren wird im Zeitintervall zwischen dem Schließzeitpunkt der Schlauchschließvorrichtung und dem Zeitpunkt, ab dem die Blasform geschlossen ist, ein gasförmiges Medium in den schlauchförmigen Vorformling eingeführt, welches den Vorformling beim Schließen der Blasform durch Vorblasen weitet. Der Durchmesser des Vorformlings wird gemessen. Zur Korrektur des Vorformlingsdurchmessers im Schließzeitpunkt wird die zum Vorblasen verwendete Gasmenge zum Vorblasen geregelt.

Die Extrusion der schlauchförmigen Vorformlinge kann kontinuierlich oder taktweise erfolgen. Die Materialstärke der Vorformlinge wird in Vorformlingslängsrichtung und bei komplexer geformten Hohlkörpern häufig auch in Umfangsrichtung durch ein Wanddickenprogramm, welches mit der Vorformlingsextrusion abläuft, gesteuert. Entsprechende Verfahren sind in WO 2004/085132 A, EP 0 776 752 A1 und EP 0 685 315 A1 beschrieben. Nach dem Schließen der Blasform wird der schlauchförmige Vorformling mit Druckluft oder einem anderen inerten Gas aufgeblasen, wobei der Vorformling sich an die Innenkontur der Blasform anpresst und abgekühlt wird. Der Kunststoff passt sich der vorgegebenen Form an und wird fest. Am Kopf des Hohlkörpers, am Boden des Hohlkörpers sowie gegebenenfalls am Seitenbereich an der Nahtstelle zwischen den beiden Werkzeughälften der Blasform entstehen Butzen aus Kunststoff, die von dem blasgeformten Hohlkörper entfernt werden und Abfälle bilden. Die Abfälle können wiederverwendet werden, wobei der Rezyklatanteil am Hohlkörper aus Qualitätsgründen allerdings beschränkt sein kann.

Die beim Blasformen gebildeten Abfallbutzen werden in der Praxis von fachkundigem Personal zur Begutachtung des Blasformprozesses herangezogen. Die Länge und Lage der Quetschnähte, besonders die Quetschnaht am Kopf des blasgeformten Hohlkörpers, stellt ein wichtiges Qualitätsmerkmal dar. Weichen die Quetschnähte hinsichtlich Länge und Lage von Vorgabewerten ab, so besteht die Gefahr einer ungleichmäßigen Wandstärkenverteilung und insbesondere die Gefahr einer zu geringen lokalen Wandstärke des blasgeformten Hohlkörpers.

Der Erfindung liegt die Aufgabe zugrunde, das eingangs beschriebene Verfahren so zu führen, dass die beim Blasformen gebildeten Abfallbutzen vorgegebene Kriterien erfüllen und insbesondere die Quetschnaht am Kopf des Hohlkörpers Vorgabewerten entspricht. Gleichzeitig sollen Durchmesseränderungen der Vorformlinge, die auf viskoelastische Effekte zurückzuführen sind, kompensiert werden.

Die Aufgabe wird erfindungsgemäß durch ein Verfahren nach Anspruch 1 gelöst. Erfindungsgemäß wird mindestens eine Größe, welche für das Butzenbild des am Kopf des Hohlkörpers und/oder des entlang einer Nahtstelle im Seitenbereich des Hohlkörpers gebildeten Butzens charakteristisch ist, erfasst und mit einem Vorgabewert verglichen. Im Falle einer unzulässigen Abweichung dieser Größe von dem Vorgabewert wird die Gasmenge, die während des Schließvorganges der Blasform im Schlauch enthalten ist, in einem Zeitintervall zwischen dem Schließzeitpunkt der Schlauchschließvorrichtung und dem Zeitpunkt, ab dem die Blasform geschlossen ist, korrigiert, um das gewünschte Butzenbild zu erzeugen. Das Zeitintervall zwischen dem Schließzeitpunkt der Schlauchschließvorrichtung und dem Zeitpunkt, ab dem die Blasform geschlossen ist, ist prozessabhängig und beträgt in der Praxis meist einige Sekunden. Vorzugsweise wird der Vorformling mittels einer in das untere Schlauchende eingeführten Spreizvorrichtung in Quetschnahtrichtung fixiert, bevor das untere Ende des Vorformlings mittels der Schlauchschließvorrichtung abgequetscht wird.

Die Erfindung beruht auf der Erkenntnis, dass die Länge der am Kopf des blasgeformten Hohlkörpers gebildeten Quetschnaht abhängig ist von der während des Schließvorganges der Blasform im Vorformling enthaltenen Gasmenge und dass dieser Zusammenhang genutzt werden kann, um die Quetschnahtlänge so zu korrigieren, dass sie einem Vorgabewert entspricht. Des Weiteren kann das Butzenbild des am Kopf des Hohlkörpers gebildeten oberen Abfallbutzens und das Butzenbild seitlicher Abfallbutzen, die entlang der Nahtstelle im Seitenbereich des Hohlkörpers entstehen, durch die Gasmenge, die während des Schließvorganges der Blasform im Schlauch enthalten ist, beeinflusst werden. Zur Änderung dieser Gasmenge stehen dem Fachmann mehrere Möglichkeiten der Verfahrensführung zur Verfügung, die einzeln oder in Kombination eingesetzt werden können.

Erfindungsgemäß wird im Zeitintervall zwischen dem Schließzeitpunkt der Schlauchschließvorrichtung und dem Zeitpunkt, ab dem die Blasform geschlossen ist, ein gasförmiges Medium, vorzugsweise Druckluft, in den schlauchförmigen Vorformling eingeführt, welches den Vorformling beim Schließen der Blasform durch Vorblasen weitet. Der Zeitpunkt des Vorblasens nach dem Schließen der Schlauchschließvorrichtung und/oder die Zeitdauer des Vorblasens und/oder der Vorblasdruck werden korrigiert, um das gewünschte Butzenbild zu erzeugen.

Im Rahmen der Erfindung liegt es auch, dass die im Vorformling enthaltene Gasmenge im Zeitintervall zwischen dem Schließzeitpunkt der Schlauchschließvorrichtung und dem Zeitpunkt, ab dem die Blasform geschlossen ist, durch Entlüften oder Absaugen reduziert wird, wobei der Reduzierungs- oder Absaugzeitpunkt nach dem Schließen der Schlauchschließvorrichtung und/oder die Zeitdauer des Entlüftens oder Absaugens oder der Absaugdruck korrigiert werden, um das gewünschte Butzenbild zu erzeugen.

Vorblasen und Entlüften/Absaugen können miteinander kombiniert werden. Eine Ausführung des erfindungsgemäßen Verfahrens sieht vor, dass der schlauchförmige Vorformling zunächst durch Vorblasen geweitet wird und dass beim Schließen der Blasform ein Teil des im Vorformling eingeschlossenen Gases durch Entlüften oder Absaugen entfernt wird. Eine weitere Verfahrensvariante sieht vor, dass das Vorblasen intervallweise durchgeführt wird und dass der schlauchförmige Vorformling zwischen zwei Vorblasintervallen entlüftet wird. Bei all diesen Verfahrensvarianten kann der Zeitpunkt des Vor blasens, der Zeitpunkt des Entlüftens oder Absaugens und/oder die Länge der Zeitintervalle variiert werden, um die während des Schließvorganges der Blasform im Schlauch enthaltene Gasmenge zu verändern und um das gewünschte Butzenbild zu erzeugen.

Die für das Butzenbild charakteristische Größe kann manuell erfasst werden. Ferner kann die Gasmenge, die während des Schließvorganges der Blasform im Schlauch enthalten ist, durch die beschriebenen Maßnahmen korrigiert werden. Eine bevorzugte Ausführung des erfindungsgemäßen Verfahrens sieht vor, dass die für das Butzenbild charakteristische Größe selbsttätig erfasst und als Messgröße einem Regelkreis zugeführt wird, der die beim Schließen der Blasform enthaltene Gasmenge steuert.

Zur Erfassung der für das Butzenbild maßgebenden Größe wird eine characteristische Abmessung des Butzens gemessen und als Regelgröße verwendet.

Als charakteristische Abmessung des Butzens kann die Quetschnahtlänge des oberhalb der Blasform gebildeten Butzens und/oder eines an der Seite der Blasform gebildeten Butzens als charakteristische Größe des Butzenbildes erfasst werden. Die messtechnische Erfassung kann ferner vereinfacht werden, wenn der blasgeformte Hohlkörper mit einer oder mehreren Markierungen versehen wird und das Butzenbild an diesen Markierungen mit einem als Referenz hinterlegten Butzenbild verglichen wird. Die Innenfläche der Blasform kann mit Gravuren versehen werden, die sich beim Blasformen als Markierungen auf dem blasgeformten Hohlkörper abbilden. Die Gravuren sind zweckmäßig in Flächenbereichen angebracht, die zur Trennebene der Blasform benachbart sind.

Von dem an dem Hohlkörper haftenden Butzen können digitale Bilder erstellt werden, welche mit einem als Referenz hinterlegten Butzenbild verglichen werden. Es liegt auch im Rahmen der Erfindung, dass die Vorformlinge zu bestimmten Zeiten, beispielsweise unmittelbar nach der Extrusion eines Vorformlings, bildtechnisch erfasst werden und dass die Abbildungen mit einem unterlegten Referenzbild verglichen werden. Die Bilder können computergestützt ausgewertet werden. Die digitale Bildauswertung lässt sich in einen Regelkreis, welche die beim Schließen der Blasform in dem schlauchförmigen Vorformling enthaltene Luftmenge steuert, integrieren.

Die bildtechnische Erfassung der Vorformlinge bietet den Vorteil, schon beim Einformen in die Blasform die notwendigen Maßnahmen zur Korrektur des Butzenbildes festlegen zu können.

Gemäß einer weiteren Ausführung des erfindungsgemäßen Verfahrens werden Sensoren in der Blasform verwendet, die das Ausbilden von Butzenstücken in Abschnitten entlang der Quetschnaht erfassen. Die Gasmenge, die beim Schließen der Blasform im Vorformling enthalten ist, kann nach Maßgabe der Sensorsignale gesteuert werden. Die Signale der Sensoren können ferner genutzt werden, um fehlerbehaftete Blasformerzeugnisse, deren Butzenbild an kritischen Stellen von Vorgabewerten abweicht aus dem Prozess auszuschleusen oder als fehlerhaft zu kennzeichnen.

Die vorbeschriebenen Maßnahmen zur Erfassung der für das Butzenbild charakteristischen Größen können an einer oder mehreren Stellen des Blasformerzeugnisses durchgeführt werden und beliebig miteinander kombiniert werden. Wenn die für das Butzenbild charakteristische Größe messtechnisch erfasst wird, kann auch ein Warnsignal abgegeben und/oder der Hohlkörper aus dem Prozess ausgeschleust werden, wenn die Größe von dem Referenzwert eines als Referenz hinterlegten Butzenbildes abweicht und die Abweichung außerhalb eines zulässigen Toleranzbereiches liegt.

Im Folgenden wird die Erfindung anhand einer lediglich ein Ausführungsbeispiel darstellenden Zeichnung erläutert. Es zeigen schematisch:
- **Fig. 1a**: eine Blasformanlage zur Herstellung von Kunststoffhohlkörpern,
- **Fig. 1b**: die in Fig. 1a dargestellte Blasformanlage aus einer zu Fig. 1 um 90° gedrehten Blickrichtung,
- **Fig. 2**: einen Schnitt A-A aus Fig. 1 a,
- **Fig. 3**: einen blasgeformten Hohlkörper mit einem oberen Abfallbutzen sowie einem unteren Abfallbutzen,
- **Fig. 4a**: das Blasformerzeugniss mit einem optimalen Butzenbild,
- **Fig. 4b**: das Blasformerzeugnis mit einem nicht optimalen Butzenbild.

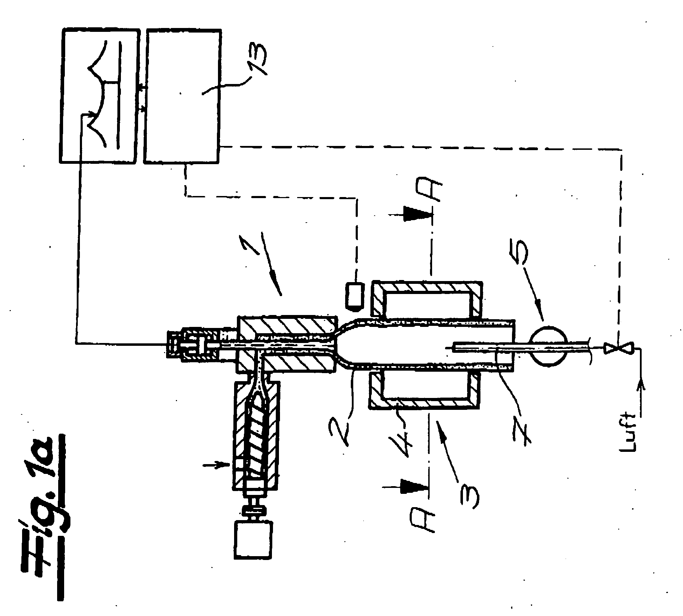

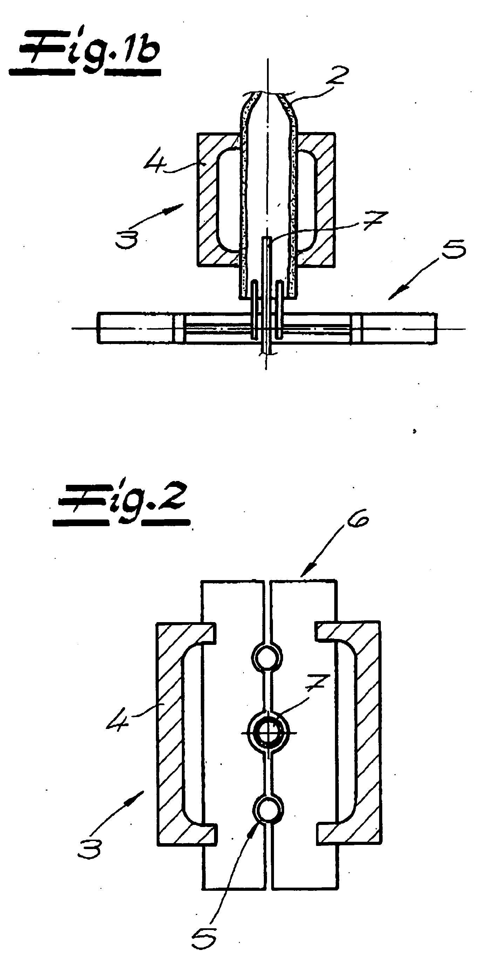

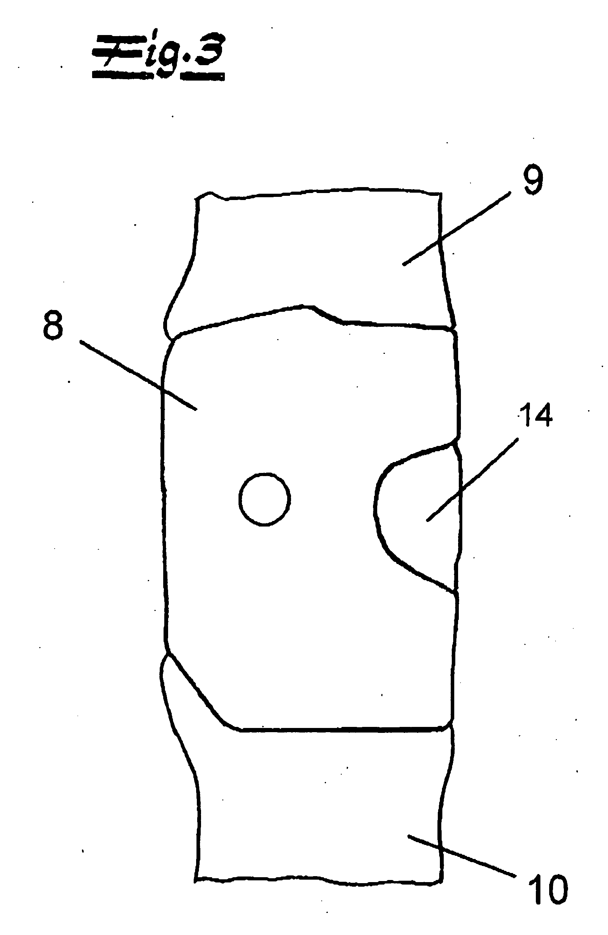

Zum grundsätzlichen Aufbau der in Fig. 1a und 1b dargestellten Blasformanlage gehören eine Plastifiziereinheit 1 zur Herstellung schlauchförmiger Vorformlinge 2 sowie eine Einrichtung 3 zum Blasformen mit einer aus Formwerkzeugen bestehenden Blasform 4, einer Spreizvorrichtung 5 sowie einer Schlauchschließvorrichtung 6. Die schlauchförmigen Vorformlinge 2 aus heißem, formbarem Kunststoff werden senkrecht nach unten aus der Plastifiziereinheit 1 extrudiert und in eine reproduzierbare Lage zu der geöffneten Blasform 4 gebracht. Das untere Ende des in die Blasform eingeführten Vorformlings 2 wird mittels der Spreizvorrichtung 5 in Quetschnahtrichtung fixiert und durch Betätigung der Schlauchschließvorrichtung 6 abgequetscht. Danach wird die Blasform 4 geschlossen, und der Vorformling 2 wird mit einem gasförmigen Medium, vorzugsweise Druckluft, welches durch einen zuvor von oben oder unten in den Vorformling eingeführten Blasdom 7 oder durch eingestochene Nadeln eingeführt wird, in der Blasform zu einem Hohlkörper 8 aufgeweitet. Am Kopf des Hohlkörpers und am Boden des Hohlkörpers entstehen Butzen 9, 10, die als Abfälle von dem blasgeformten Hohlkörper 8 abgetrennt werden. Ein Blasformerzeugnis 8 mit einem kopfseitigen oberen Abfallbutzen 9 und einem bodenseitigen unteren Abfallbutzen 10 sowie einem seitlichen Abfallbutzen 14 sind in Fig. 3 dargestellt.

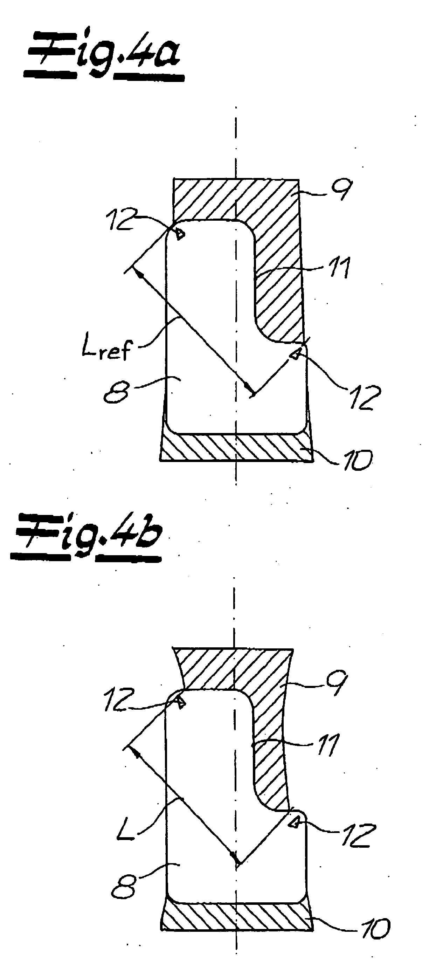

Zwischen der Qualität des Blasformerzeugnisses 8 und dem Butzenbild besteht eine Abhängigkeit. Es gilt, in der laufenden Produktion Blasformerzeugnisse mit einem vorher durch Optimierung festgelegten Butzenbild zu erzeugen. Das gewünschte Butzenbild wird als Referenz hinterlegt. Die Fig. 4a zeigt beispielsweise ein gewünschtes Butzenbild. Die Quetschnaht 11 am Kopf des Hohlkörpers 8 weist eine vorgegebene Länge L_{ref} auf. Eine kürzere oder längere Quetschnaht ist mit einem Qualitätsverlust verbunden. In Fig. 4b ist ein Blasformerzeugnis dargestellt, dessen obere Quetschnahtlänge L nicht dem Referenzwert L_{ref} entspricht. Die Größe, welche für das Butzenbild des am Kopf des Hohlkörpers gebildeten Butzens charakteristisch ist, wird erfasst und mit einem Vorgabewert verglichen. Im Falle einer unzulässigen Abweichung der Größe von dem Vorgabewert wird die Gasmenge, die während des Schließvorganges der Blasform im Schlauch enthalten ist, in einen Zeitintervall zwischen dem Schließzeitpunkt der Schlauchschließvorrichtung 6 und dem Zeitpunkt, ab dem die Blasform 4 geschlossen ist, korrigiert, um das gewünschte Butzenbild zu erzeugen.

Zur Korrektur des Butzenbildes wird im Zeitintervall zwischen dem Schließzeitpunkt der Schlauchschließvorrichtung 6 und dem Zeitpunkt, ab dem die Blasform geschlossen ist, ein gasförmiges Medium, z. B. Druckluft, in den schlauchförmigen Vorformling 2 eingeführt, welches den Vorformling 2 beim Schließen der Blasform durch Vorblasen weitet. Der Zeitpunkt des Vorblasens nach dem Schließen der Schlauchschließvorrichtung und/oder die Zeitdauer des Vorblasen und/oder der Vorblasdruck werden korrigiert und bei nachfolgenden Blasformerzeugnissen das gewünschte Butzenbild eingestellt.

Die für das Butzenbild charakteristische Größe kann selbsttätig erfasst und als Messgröße einem Regelkreis zugeführt werden, der die beim Schließen der Blasform enthaltene Gasmenge steuert.

Zur Messgrößenerfassung kann der Fachmann auf verschiedene Verfahrensmaßnahmen zurückgreifen. Es kann eine charakteristische Abmessung des Butzens 9 gemessen und als Regelgröße verwendet werden. Im Ausführungsbeispiel wird insbesondere die Quetschnahtlänge L des oberhalb der Blasform gebildeten Butzens 9 als charakteristische Größe des Butzenbildes erfasst. Um die Messungen zu vereinfachen kann der Hohlkörper 8 beim Blasformen mit einer oder mehreren Markierungen 12 versehen werden, wobei das Butzenbild an diesen Markierungen 12 mit einem als Referenz hinterlegten Butzenbild verglichen wird (Fig. 4a und 4b).

In den in Fig. 1a/1b dargestelltem Ausführungsbeispiel werden von dem an dem Hohlkörper 8 haftenden Butzen 9, 10, 14 digitale Bilder erstellt und diese mit einem als Referenz hinterlegten Butzenbild verglichen. Die Bilder können computergestützt ausgewertet werden. Die digitale Bildauswertung ist in einem Regelkreis 13, welche die beim Schließen der Blasform 4 im schlauchförmigen Vorformling 2 enthaltene Luftmenge steuert, integriert.

## Patentansprüche

1. Verfahren zur Herstellung von Kunststoffhohlkörpern durch Blasformen, bei dem
- ein schlauchförmiger Vorformling (2) aus heißem, formbaren Kunststoff senkrecht nach unten extrudiert und in eine reproduzierbare Lage zu einer geöffneten Blasform (4) gebracht wird,
- das untere Ende des Vorformlings (2) mittels einer Schlauchschließvorrichtung (6) abgequetscht wird,
- die Blasform (4) geschlossen wird und
- der Vorformling (2) mit einem gasförmigen Medium, welches durch einen zuvor von oben oder unten in den Vorformling eingeführten Blasdom (7) oder durch eingestochene Nadeln eingeführt wird, in der Blasform zu einem Hohlkörper (8) aufgeweitet wird,
wobei zumindest am Kopf des Hohlkörpers und am Boden des Hohlkörpers Butzen (9, 10) entstehen, die als Abfall von dem blasgeformten Hohlkörper (8) abgetrennt werden, **dadurch gekennzeichnet, dass** mindestens eine Größe, welche für das Butzenbild des am Kopf des Hohlkörpers und/oder des entlang einer Nahtstelle im Seitenbereich des Hohlkörpers gebildeten Butzens (9, 14) charakteristisch ist, erfasst und mit einem Vorgabewert verglichen wird und dass im Falle einer unzulässigen Abweichung dieser Größe von dem Vorgabewert die Gasmenge, die während des Schließvorganges der Blasform (4) im Schlauch enthalten ist, in einem Zeitintervall zwischen dem Schließzeitpunkt der Schlauchschließvorrichtung (6) und dem Zeitpunkt, ab dem die Blasform (4) geschlossen ist, korrigiert wird, um das gewünschte Butzenbild zu erzeugen, wobei zur Erfassung der für das Butzenbild maßgebenden Größe eine charakteristische Abmessung des Butzens (9, 14) gemessen und als Regelgröße verwendet wird oder der Vorformling (2) bildtechnisch erfasst und die Abbildung mit einem hinterlegten Referenzbild verglichen wird.

2. Verfahren nach Anspruch 1, **dadurch gekennzeichnet, dass** der Vorformling (2) mittels einer in das untere Schlauchende eingeführten Spreizvorrichtung (5) in Quetschnahtrichtung fixiert wird, bevor das untere Ende des Vorformlings (2) mittels der Schlauchschließvorrichtung (6) abgequetscht wird.

3. Verfahren nach Anspruch 1 oder 2, **dadurch gekennzeichnet, dass** im Zeitintervall zwischen dem Schließzeitpunkt der Schlauchschließvorrichtung (6) und dem Zeitpunkt, ab dem die Blasform (4) geschlossen ist, ein gasförmiges Medium in den schlauchförmigen Vorformling (2) eingeführt wird, welches den Vorformling beim Schließen der Blasform (4) durch Vorblasen weitet, wobei der Zeitpunkt des Vorblasens nach dem Schließen der Schlauchschließvorrichtung (6) und/oder die Zeitdauer des Vorblasens und/oder der Vorblasdruck korrigiert werden, um das gewünschte Butzenbild zu erzeugen.

4. Verfahren nach Anspruch 1 oder 2, **dadurch gekennzeichnet, dass** die im Vorformling enthaltene Gasmenge im Zeitintervall zwischen dem Schließzeitpunkt der Schlauchschließvorrichtung (6) und dem Zeitpunkt, ab dem die Blasform (4) geschlossen ist, durch Entlüften oder Absaugen reduziert wird, wobei der Entlüftungs- oder Absaugzeitpunkt nach dem Schließen der Schlauchschließvorrichtung (6) und/oder die Zeitdauer des Entlüftens oder Absaugens oder der Absaugdruck korrigiert werden, um das gewünschte Butzenbild zu erzeugen.

5. Verfahren nach einem der Ansprüche 1 bis 4, **dadurch gekennzeichnet, dass** der schlauchförmige Vorformling (2) zunächst durch Vorblasen geweitet wird und dass beim Schließen der Blasform (4) ein Teil des im Vorformling eingeschlossenen Gases durch Entlüften oder Absaugen entfernt wird.

6. Verfahren nach einem der Ansprüche 1 bis 4, **dadurch gekennzeichnet, dass** das Vorblasen intervallweise durchgeführt wird und dass der schlauchförmige Vorformling (2) zwischen zwei Vorblasintervallen entlüftet wird.

7. Verfahren nach einem der Ansprüche 1 bis 6, **dadurch gekennzeichnet, dass** die für das Butzenbild charakteristische Größe selbsttätig erfasst und als Messgröße einem Regelkreis zugeführt wird, der die beim Schließen der Blasform enthaltene Gasmenge steuert.

8. Verfahren nach einem der Ansprüche 1 bis 7, **dadurch gekennzeichnet, dass** die Quetschnahtlänge (2) des oberhalb der Blasform (4) gebildeten Butzens (9) und/oder eines an der Seite der Blasform gebildeten Butzens (14) als charakteristische Größe des Butzenbildes erfasst wird.

9. Verfahren nach einem der Ansprüche 1 bis 8, **dadurch gekennzeichnet, dass** der Hohlkörper (8) beim Blasformen mit einer oder mehreren Markierungen (12) versehen wird und dass das Butzenbild an diesen Markierungen (12) mit einem als Referenz hinterlegten Butzenbild verglichen wird.

10. Verfahren nach einem der Ansprüche 1 bis 9, **dadurch gekennzeichnet, dass** von den an dem Hohlkörper (8) haftenden Butzen (9, 10, 14) digitale Bilder erstellt und diese mit einem als Referenz hinterlegten Butzenbild verglichen werden.

11. Verfahren nach Anspruch 1 oder 10, **dadurch gekennzeichnet, dass** die Bilder computergestützt ausgewertet werden und dass die digitale Bildauswertung in einen Regelkreis (13), welche die beim Schließen der Blasform (4) im schlauchförmigen Vorformling (2) enthaltene Luftmenge steuert, integriert wird.

12. Verfahren nach einem der Ansprüche 1 bis 11, **dadurch gekennzeichnet, dass** Sensoren in der Blasform verwendet werden, die das Ausbilden von Butzenstücken in Abschnitten entlang der Quetschnaht erfassen.

13. Verfahren nach einem der Ansprüche 1 bis 12, **dadurch gekennzeichnet, dass** die für das Butzenbild charakteristische Größe selbsttätig erfasst wird und dass ein Warnsignal abgegeben und/oder der Hohlkörper (8) aus dem Prozess ausgeschleust wird, wenn die Größe von dem Referenzwert eines als Referenz hinterlegten Butzenbildes abweicht und die Abweichung außerhalb eines zulässigen Toleranzbereiches liegt.

## Claims

1. A method for producing hollow plastic bodies by means of blow moulding, in which
- a tubular parison (2) is extruded vertically downward of hot, mouldable plastic and brought into a reproducible position relative to an opened blowing mould (4),
- the lower end of the parison (2) is pinched off by means of a tube closing device (6),
- the blowing mould (4) is closed and
- the parison (2) is expanded into a hollow body (8) in the blowing mould by means of a gaseous medium that is introduced through a blow pin (7) that was previously inserted into the parison from above or below or through inserted needles,
wherein parison waste (9, 10) is created at least at the head of the hollow body and at the bottom of the hollow body and separated from the blow-moulded hollow body (8) in the form of waste material, **characterized in that** at least one variable that is characteristic for the parison waste pattern of the parison waste (9, 14) formed at the head of the hollow body and/or along a seam in the lateral region of the hollow body is determined and compared with a default value, and **in that** the gas quantity contained in the tube during the closing process of the blowing mould (4) is, in case of an impermissible deviation of said variable from the default value, corrected in a time interval between the closing time of the tube closing device (6) and the time, beginning at which the blowing mould (4) is closed, in order to produce the desired parison waste pattern, wherein a characteristic dimension of the parison waste (9, 14) is measured and used as controlled variable or an image of the parison (2) is produced and compared with a stored reference image in order to determine the characteristic that is decisive for the parison waste pattern.

2. The method according to Claim 1, **characterized in that** the parison (2) is fixed in the pinching seam direction by means of a spreading device (5) inserted into the lower tube end before the lower end of the parison (2) is pinched off by means of the tube closing device (6).

3. The method according to Claim 1 or 2, **characterized in that** a gaseous medium is introduced into the tubular parison (2) in the time interval between the closing time of the tube closing device (6) and the time, beginning at which the blowing mould (4) is closed, and expands the parison by means of pre-blowing during the closing of the blowing mould (4), wherein the pre-blowing time after the closing of the tube closing device (6) and/or the pre-blowing duration and/or the pre-blowing pressure is/are corrected in order to produce the desired parison waste pattern.

4. The method according to Claim 1 or 2, **characterized in that** the gas quantity contained in the parison is reduced by means of evacuation or suction in the time interval between the closing time of the tube closing device (6) and the time, beginning at which the blowing mould (4) is closed, wherein the evacuation or suction time after the closing of the tube closing device (6) and/or the evacuation or suction duration or the suction pressure is/are corrected in order to produce the desired parison waste pattern.

5. The method according to one of Claims 1 to 4, **characterized in that** the tubular parison (2) is initially expanded by means of pre-blowing, and **in that** a portion of the gas enclosed in the parison is removed by means of evacuation or suction during the closing of the blowing mould (4).

6. The method according to one of Claims 1 to 4, **characterized in that** the pre-blowing is carried out in intervals, and **in that** the tubular parison (2) is evacuated between two pre-blowing intervals.

7. The method according to one of Claims 1 to 6, **characterized in that** the characteristic variable of the parison waste pattern is determined automatically and fed as measured variable to a control circuit that controls the gas quantity contained during the closing of the blowing mould.

8. The method according to one of Claims 1 to 7, **characterized in that** the pinching seam length (2) of the parison waste (9) formed above the blowing mould (4) and/or of a parison waste (14) formed on the side of the blowing mould is determined as characteristic variable of the parison waste pattern.

9. The method according to one of Claims 1 to 8, **characterized in that** the hollow body (8) is provided with one or more markings (12) during the blow moulding process, and **in that** the parison waste pattern is compared with a parison waste pattern stored as reference at these markings (12).

10. The method according to one of Claims 1 to 9, **characterized in that** digital images of the parison waste (9, 10, 14) adhering to the hollow body (8) are produced and these images are compared with a parison waste pattern stored as reference.

11. The method according to Claim 1 or 10, **characterized in that** the images are analyzed in a computer-assisted fashion, and **in that** the digital image analysis is integrated into a control circuit (13) that controls the air quantity contained in the tubular parison (2) during the closing of the blowing mould (4).

12. The method according to one of Claims 1 to 11, **characterized in that** sensors for detecting the formation of parison waste pieces in sections along the pinching seam are used in the blowing mould.

13. The method according to one of Claims 1 to 12, **characterized in that** the characteristic variable of the parison waste pattern is determined automatically, and **in that** a warning signal is output and/or the hollow body (8) is excluded from the process if the variable deviates from the reference value of a parison waste pattern stored as reference and the deviation lies outside a permissible tolerance range.

## Revendications

1. Procédé de fabrication de corps creux en matière plastique par moulage par soufflage, dans lequel
- une ébauche de forme tubulaire (2) en matière plastique chaude et malléable est extrudée verticalement vers le bas et amenée dans une position reproductible vers un moule de soufflage ouvert (4),
- l'extrémité inférieure de l'ébauche (2) est écrasée au moyen d'un dispositif de fermeture de tube (6),
- le moule de soufflage (4) est fermé et
- l'ébauche (2) est élargie dans le moule de soufflage pour former un corps creux (8) à l'aide d'un fluide gazeux qui est introduit dans un mandrin de soufflage (7) introduit préalablement par le haut ou le bas dans l'ébauche ou par des aiguilles piquées dedans,
étant créées, du moins à la tête du corps creux et au fond du corps creux, des pastilles (9, 10) qui sont en tant que déchets séparées du corps creux moulé par soufflage (8), **caractérisé en ce qu'**il présente au moins une taille qui est caractéristique de la structure de la pastille (9, 14) formée à la tête du corps creux et/ou le long d'un point de soudure sur le côté du corps creux et est comparée à une valeur prescrite et que, dans le cas d'un écart inadmissible de cette taille par rapport à la valeur prescrite, le volume de gaz qui est contenu dans le tube pendant l'opération de fermeture du moule de soufflage (4) est corrigé pendant un laps de temps entre le moment de fermeture du dispositif de fermeture de tube (6) et le moment à partir duquel le moule de soufflage (4) est fermé afin d'obtenir la structure souhaitée de la pastille, sachant que, pour détecter la taille adaptée pour la structure de la pastille, on mesure par technique de mesure et on utilise comme paramètre de réglage une dimension caractéristique de la pastille (9, 14) et que le relevé est comparé à un schéma de référence enregistré.

2. Procédé selon la revendication 1, **caractérisé en ce que** l'ébauche (2) est fixée au moyen d'un dispositif d'écartement (5) introduit dans l'extrémité inférieure du tuyau en direction de la soudure par écrasement avant que l'extrémité inférieure de l'ébauche (2) soit écrasée au moyen du dispositif de fermeture de tube (6).

3. Procédé selon la revendication 1 ou 2, **caractérisé en ce que**, pendant le laps de temps entre le moment de fermeture du dispositif de fermeture de tube (6) et le moment à partir duquel le moule de soufflage (4) est fermé, un fluide gazeux est introduit dans l'ébauche de forme tubulaire (2) et élargit l'ébauche par pré-soufflage lors de la fermeture du moule de soufflage (4), le moment du pré-soufflage après la fermeture du dispositif de fermeture de tube (6) et/ou la durée du pré-soufflage et/ou la pression de pré-soufflage étant corrigés afin d'obtenir la structure souhaitée de la pastille.

4. Procédé selon la revendication 1 ou 2, **caractérisé en ce que** le volume de gaz contenu dans l'ébauche est réduit entre le laps de temps entre le moment de fermeture du dispositif de fermeture de tube (6) et le moment à partir duquel le moule de soufflage (4) est fermé par purge ou aspiration, le moment de purge ou d'aspiration après la fermeture du dispositif de fermeture de tube (6) et/ou la durée de la purge ou de l'aspiration ou la pression d'aspiration étant corrigés pour créer la structure souhaitée de la pastille.

5. Procédé selon une des revendications 1 à 4, **caractérisé en ce que** l'ébauche de forme tubulaire (2) est d'abord élargie par pré-soufflage et que, à la fermeture du moule de soufflage (4), une partie du gaz renfermé dans l'ébauche est éliminée par purge ou aspiration.

6. Procédé selon une des revendications 1 à 4, **caractérisé en ce que** le pré-soufflage est réalisé par intermittence et que l'ébauche de forme tubulaire (2) est purgée entre deux intervalles de pré-soufflage.

7. Procédé selon une des revendications 1 à 6, **caractérisé en ce que** la taille caractéristique de la structure de la pastille est enregistrée automatiquement et est communiquée sous forme de paramètre de mesure à un circuit de réglage qui contrôle le volume de gaz contenu lors de la fermeture du moule de soufflage.

8. Procédé selon une des revendications 1 à 7, **caractérisé en ce que** la longueur du cordon de soudure écrasé (2) de la pastille (9) formée au-dessus du moule de soufflage (4) et/ou de la pastille (14) formée sur le côté du moule de soufflage est enregistrée en tant que paramètre caractéristique de la structure de la pastille.

9. Procédé selon une des revendications 1 à 8, **caractérisé en ce que** le corps creux (8) est pourvu lors du moulage par soufflage d'un ou plusieurs marquages (12) et que la structure de la pastille au niveau de ces marquages (12) est comparée à un schéma de pastille de référence enregistré.

10. Procédé selon une des revendications 1 à 9, **caractérisé en ce qu'**on établit des images numériques à partir des pastilles (9, 10, 14) adhérant au corps creux (8) et qu'on les compare à un schéma de pastille de référence enregistré.

11. Procédé selon la revendication 1 ou 10, **caractérisé en ce que** les images sont exploitées avec assistance informatique et que l'exploitation graphique numérique est intégrée dans un circuit de réglage (13) qui contrôle le volume d'air contenu dans l'ébauche de forme tubulaire (2) lors de la fermeture du moule de soufflage (4).

12. Procédé selon la revendication 1 à 11, **caractérisé en ce qu'**on utilise dans le moule de soufflage des capteurs qui enregistrent la formation de pièces en pastilles dans des sections situées le long du cordon de soudure écrasé.

13. Procédé selon la revendication 1 à 12, **caractérisé en ce que** la taille caractéristique de la structure de la pastille est enregistrée automatiquement et qu'un signal d'avertissement est émis et/ou que le corps creux (8) est éjecté du processus si sa taille diverge de la valeur de référence d'un schéma de pastille de référence enregistré et si l'écart se situe en dehors d'une plage de tolérance admissible.
